# FASCICULE DE BREVET EUROPEEN

(11) **EP 3 765 365 B1**
(45) Date de publication et mention de la délivrance du brevet: **14.12.2022**
(21) Numéro de dépôt: 19711080.2
(22) Date de dépôt: 13.03.2019
(51) Int. Cl.: B64C 27/30, B64C 27/22, B64C 27/52, B64C 27/26

(54) **AERODYNE HYBRIDE DE TYPE VTOL OU STOL**
HYBRIDES LUFTFAHRZEUG VOM VTOL- ODER STOL-TYP
HYBRID AERODYNE OF THE VTOL OR STOL TYPE

(30) Priorité: 13.03.2018 FR 1852172
(43) Date de publication de la demande: 20.01.2021
(73) Titulaire: Innostar, 92320 Chatillon (FR)
(72) Inventeur: SIMON, Jean-Michel, 92320 CHATILLON (FR)
(74) Mandataire: Lavialle, Bruno François Stéphane
(86) Numéro de dépôt international: PCT/EP2019/056321
(87) Numéro de publication internationale: WO 2019/175266

(56) Documents cités:
- EP-A1- 2 468 627
- WO-A1-2017/021608
- DE-A1-102009 015 805
- DE-C- 383 661
- US-A- 2 247 034
- US-B1- 7 490 792

## Description

L'invention concerne un aérodyne hybride à décollage et/ou atterrissage vertical ou court, du type drone de taille moyenne, permettant à l'aérodyne de décoller et/ou d'atterrir verticalement ou sur de courtes distances, puis de se mouvoir horizontalement à grande vitesse, l'aérodyne hybride étant du type équipé d'une voilure fixe et d'une voilure tournante, apte à être immobilisée en vol de croisière. On entend par taille moyenne un aérodyne dont l'une des exigences principales est une autonomie de vol importante par exemple pour des missions de surveillance côtière.

### ARRIERE PLAN DE L'INVENTION

L'invention s'inscrit dans un état de la technique nombreux et varié comme par exemple celui rappelé dans le document WO2017021608.

L'idée d'utiliser, pour la phase de vol verticale (décollage et atterrissage), une ou des mono pales dans des concepts de « stop rotor » hybrides VTOL (acronyme anglo-saxon pour décollage et atterrissage vertical) est une idée très ancienne. En effet, une mono pale présente, de façon évidente, un intérêt vis-à-vis de la traînée de la voilure tournante quand la rotation de celle-ci est arrêtée. La minimisation de la traînée est en effet le problème principal à résoudre dans ce genre de machines volantes si l'on souhaite atteindre des vitesses importantes en allure de croisière. Aucun de ces systèmes n'a réellement été développé et commercialisé.

On pense que les raisons qui ont conduit à l'échec de ces systèmes, et qui font mieux comprendre l'intérêt de la présente invention, sont les suivantes :
- dans le cas où la voilure tournante doit être aérodynamiquement « cachée » en vol horizontal, les mécanismes proposés sont trop complexes, et l'opération comporte des phases d'instabilité aérodynamique au moment où la voilure est mise à l'abri, après le décollage et la transition en vol de croisière et au moment où elle est découverte pour l'atterrissage,
- dans le cas où le rotor n'est pas caché et laissé libre dans le flux d'air (ou vent relatif) en vol de croisière, de deux choses l'une pour avoir une puissance de décollage satisfaisante :
   soit disposer d'un diamètre du rotor important, et, par conséquent, une longueur de pale assez grande qui conduit à des instabilités au moment de l'arrêt et/ou de la remise en rotation du rotor, quand le rotor perd l'effet stabilisateur de la force centrifuge. En effet, les pales d'un rotor, pour être efficaces aérodynamiquement, doivent être relativement fines et donc relativement souples, et présenter de bonnes performances d'aéroélasticité, telles que celles des pales de rotors d'hélicoptères modernes,
   soit mettre en œuvre des pales plus courtes et plus rigides, donc plus stables, mais alors la puissance nécessaire pour assurer la sustentation est très élevée, ce qui nuit à l'intérêt du concept.

L'invention concerne un aérodyne comprenant au moins deux mono-pales, espacés longitudinalement le long de l'axe de roulis de l'appareil, comme par exemple illustré par les figures 16a et 16b du document WO2017021608.

Ces figures représentent schématiquement, respectivement en vol stationnaire ou vertical et en vol horizontal ou de croisière, un aérodyne comprenant une voilure fixe supportée par un fuselage, qui supporte également une voilure mobile de sustentation en vol vertical, et dont la rotation est arrêtée en fin de phase de transition du vol vertical au vol horizontal de croisière à grande vitesse.

La voilure mobile comporte deux mono-pales contrarotatives dont les axes de rotation sont décalés l'un de l'autre le long de l'axe de roulis de l'aérodyne. En vol de croisière chacune des mono-pales est orientée longitudinalement vers l'arrière de l'aérodyne, seuls les contrepoids et les parties rigides qui les supportent étant dirigés vers l'avant de leur mât rotor respectif.

II est important de noter qu'il est possible d'installer une configuration avec des rotors intermédiaires entre les mono-pales avant et arrière, ces rotors pouvant être mono ou bipale.

L'invention a pour but d'optimiser de manière réaliste les performances d'un aérodyne de ce type.

L'amélioration des performances tient d'une part dans la mise en œuvre de moyens pour améliorer ses allures dans les périodes de transition entre vol vertical et vol horizontal, après le décollage et avant l'atterrissage et d'autre part, dans la mise en œuvre de moyens adaptés à diminuer sa traînée en vol de croisière.

### OBJET DE L'INVENTION

Pour ce qui concerne l'amélioration des allures dans les périodes de transition vol vertical, vol horizontal, l'un des objets de l'invention consiste, dans un aérodyne hybride comprenant un fuselage, une voilure fixe et une voilure tournante apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins une mono-pale à contrepoids située au sommet et à l'avant du fuselage, ladite mono-pale étant articulé autour d'un axe perpendiculaire à l'axe de rotation du rotor, sensiblement au niveau dudit axe de rotation du mât rotor, caractérisé en ce qu'il comporte des moyens pour autoriser l'inclinaison du disque rotor formé par ladite mono-pale autour de l'axe perpendiculaire susdit vers le bas et vers l'avant et limiter son inclinaison vers l'arrière sur une plage de basculement au plus égale à cinq degrés d'angle (et de préférence de l'ordre de deux degrés).

Parmi ces moyens, l'un d'eux réside dans le fait que, le fuselage présentant une partie avant plongeante par rapport à son axe de roulis, le mât rotor de la mono-pale avant est situé à la jonction de cette partie avec la partie principale du fuselage. Le basculement vers l'avant de cette mono-pale peut donc être important, en fonction de la pente plus ou moins abrupte de la partie plongeante.

Cette disposition géométrique de la mono-pale avant présente plusieurs avantages. L'un d'eux est que la commande du basculement du disque rotor vers l'avant engendre une composante horizontale au vol de l'aérodyne qui est progressive sans modification de l'assiette de ce dernier. Le second est que le disque rotor est bien que pouvant être fortement basculé vers l'avant demeure très voisin du sommet du fuselage donc moins de perturbant sur le plan aérodynamiques pendant vol de croisière.

Pour ce qui concerne la mono-pale arrière, alors que le fuselage possède une partie arrière plongeante par rapport à son axe de roulis, le mât rotor de la mono-pale arrière est situé à la jonction de cette partie avec la partie arrière du fuselage.

Ainsi, le disque rotor que forme cette mono-pale, lorsqu'elle tourne, peut être incliné, à l'instar de la mono-pale avant, d'un angle important vers l'arrière pour des manœuvres en vol quasi stationnaire et de manière limitée vers l'avant (au plus de 5 degrés et de préférence de l'ordre de 2 degrés).

Pour ce qui concerne la question de la traînée, on mentionnera l'existence de certaines solutions proposées dans l'état de la technique illustré, par exemple, par les documents US 3.612.444 et US 6.622.962 qui consistent à enfermer la voilure tournante dans un logement soit prévu à l'intérieur de la surface aérodynamique extérieure du fuselage de l'appareil, soit dans un boîtier séparé de ce fuselage et le surmontant, avec lui-même ses caractéristiques aérodynamiques propres. Ces solutions sont peu satisfaisantes parce que complexes à mettre en œuvre ou imparfaites dans les résultats qu'elles procurent.

A cet effet, l'aérodyne selon l'invention comporte d'autres caractéristiques parmi lesquelles un élément de structure porté par le fuselage et mobile par rapport à celui-ci entre une position escamotée dans laquelle il est éloigné de la pale, au voisinage de la surface extérieure du fuselage ou l'affleurant et une position de service dans laquelle il vient au contact d'au moins ladite mono-pale de la voilure tournante quand celle-ci est arrêtée et verrouillée longitudinalement.

Il vient également au contact du contrepoids de la deuxième mono-pale, permettant ainsi d'assurer un alignement précis de l'extrémité de la première mono-pale avec le contrepoids de la seconde.

Cet élément de structure mobile est profilé de manière qu'avec la pale qu'il vient contacter par le dessous, il constitue une excroissance supérieure monolithique du fuselage qui offre une traînée minimale lors de la vitesse de croisière de l'aérodyne.

On indiquera que cet élément possède une surface supérieure dont le profil est en correspondance de forme avec celui la face inférieure des mono-pales sous lesquelles il s'appuie. Cet appui sera réalisé avec une certaine contrainte contre la voilure tournante de manière à solidariser le plus possible pales et élément. Dans un mode de réalisation avantageux, cette contrainte d'appui peut être obtenue par la création d'une aspiration de la voilure tournante (mono-pale) contre la face supérieure de l'élément de structure mobile de manière à créer entre eux un effet ventouse. Un revêtement élastiquement compressible peut à cet effet garnir la surface supérieure de l'élément de structure pour à la fois assurer l'élasticité de l'appui, la protection des pièces en contact et l'étanchéité du contact si une aspiration est mise en œuvre.

Il sera avantageux, selon l'invention, de prévoir un espace restreint entre une mono-pale et le contrepoids de la mono-pale ou de la pale d'un rotor bipale qui la suit afin de réduire au minimum les discontinuités de la surface supérieure de cette excroissance monolithique que forment, sur le fuselage, l'élément de structure et les pales sous lesquelles il s'appuie et réduire les zones de turbulence aérodynamique. On peut à cet égard noter que la surface supérieure de l'élément de structure mobile comporte un relief au niveau de l'interstice (espace restreint) séparant deux pales successives. Ce relief vient avantageusement combler cet espace en position active de l'élément mobile de structure bien qu'il puisse constituer une petite solution de continuité de la surface supérieure du fuselage en position inactive (lors de la rotation des mono-pales), ce « défaut » n'ayant aucune conséquence sur les qualités aérodynamiques de l'appareil dans cette phase de vol.

La recherche d'une traînée minimale en phase de vol de croisière passe par un positionnement de pales précis et le moins perturbant possible pour l'écoulement d'air environnant. C'est pour cette raison qu'on cherchera à aligner le plus strictement possible les extrémités voisines des pales dans leur position de stockage pour éliminer les reliefs et les solutions de continuité des surfaces en contact avec l'écoulement d'air environnant.

Ainsi, le profil de la surface supérieure de l'élément de structure mobile sera, pour au moins sa partie en regard de l'extrémité de chaque pale en correspondance de forme avec le profil de la face inférieure de celle-ci. Et pour assurer cette continuité de surface entre l'extrados d'une pale et celui de la suivante (ou du contrepoids de la suivante), une pale plane sera immobilisée en position de stockage sous un pas nul tandis qu'une pale vrillée sera immobilisée sous un pas négatif.

Selon une autre caractéristique secondaire de l'invention, la deuxième partie de la mono-pale avant, qui porte le contrepoids, est évidée.

En outre, chaque disque rotor dispose d'une possibilité d'inclinaison latérale par rapport au fuselage pour maîtriser le roulis et le lacet de l'appareil.

Dans ce mode de réalisation de l'invention à deux mono-pales, les disques rotor sont tels que leur projection sur un plan horizontal comporte une zone d'intersection. Selon une variante de ce mode de réalisation, le diamètre du disque rotor avant et inférieur à celui du disque rotor arrière.

Dans le cas où la voilure fixe comporte une aile principale transversale au fuselage, la zone d'intersection susdite est dans une première réalisation en avant de la projection horizontale de cette aile principale. Dans une seconde réalisation, cette zone d'intersection contient le foyer de portance de cette aile principale.

De manière avantageuse, l'aile fixe comporte des volets rabattables verticalement.

Enfin, il sera avantageux de pourvoir l'aérodyne selon l'invention d'un empennage en H, en U ou en V vers le bas.

Ce n'est pas sortir du cadre ni de l'esprit de l'invention que de prévoir, entre les deux mono-pales avant et arrière susdits, d'autres éléments de voilure tournante bipales (un ou deux rotors supplémentaires), si la longueur du fuselage le permet, dont les deux pales coopèrent, en position de stockage avec l'élément de structure mobile pour obtenir avec les mêmes moyens les mêmes avantages que ceux déjà décrits en terme d'amélioration de la traînée en vol de croisière. Une autre variante qui relève également de l'invention consiste à prévoir à la place du rotor mono-pale arrière, un rotor bipale. Dans ce cas il n'y aurait pas d'intersection des disques rotors.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 illustre une machine volante conforme à l'invention dans sa configuration de vol vertical,
- la figure 2 illustre la machine de la figure 1 en vol de croisière,
- la figure 3 est une vue de côté de l'appareil de l'invention en vol vertical,
- la figure 4 est la même vue de côté que celle de la figure 3, l'appareil étant en allure de croisière,
- la figure 5 est une vue de dessus de l'appareil représenté aux figures précédentes
- les figures 6a, 6b et 6c illustrent schématiquement certaines des inclinaisons possibles des disques rotors de l'aérodyne selon l'invention et
- la figure 7 est un schéma d'une variante de réalisation possible de l'aérodyne selon l'invention.

### DESCRIPTION DETAILLEE DE L'INVENTION

On se reportera tout d'abord aux quatre premières figures.

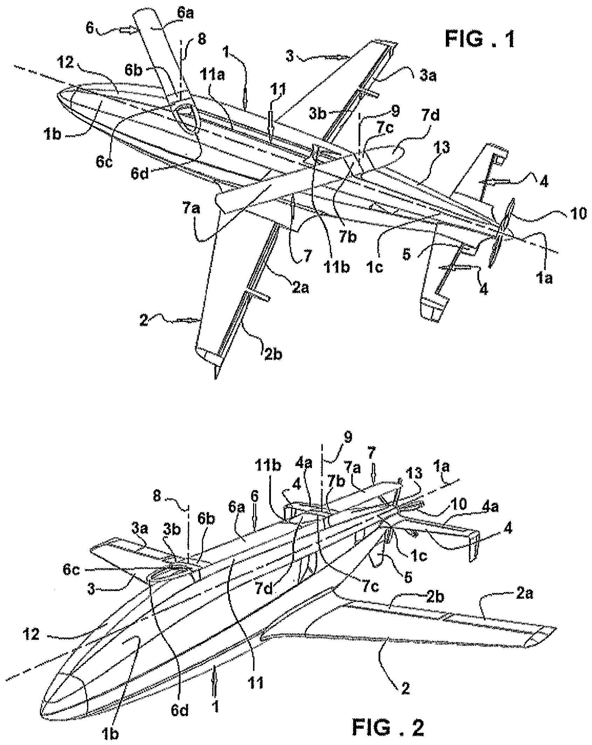

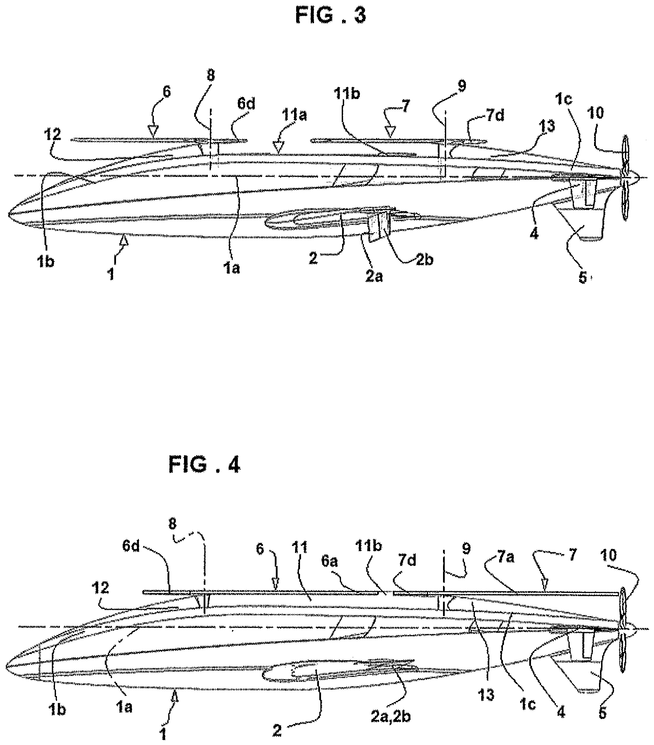

L'aérodyne représenté comporte un fuselage 1 dont l'axe de roulis est noté la. Ce fuselage est équipé d'une voilure fixe comportant une aile principale 2, 3, un empennage 4 en U inversé et une dérive 5, tout cela de manière usuelle et bien connue de l'homme de métier. On aura noté que l'aile 2, 3 possède respectivement des volets 2a, 2b, 3a, 3b, rabattus aux figures 1 et 3, et en service aux figure 2 et 4. De manière connue, les branches horizontales de l'empennage comportent également des volets 4a.

Dans le mode de réalisation représenté à ces figures, l'aérodyne selon l'invention comporte une mono-pale avant 6 et une mono-pale arrière 7. La mono-pale avant 6 comprend une pale active 6a qui génère une portance pendant sa rotation. Cette mono-pale est composée d'une première partie 6b qui porte ladite pale active et constitue la liaison de la pale active à un mât rotor 8 et une deuxième partie 6c qui porte le contrepoids 6d et relie ce dernier au mât rotor 8. On notera que la partie 6c et le contrepoids 6d sont évidés pour améliorer leurs performances aérodynamiques.

L'ensemble ainsi constitué par la pale active 6a et la partie rigide 6b qui la porte est articulé autour d'un axe transversal, perpendiculaire à l'axe de rotation du rotor, sensiblement au niveau dudit axe de rotation du mât rotor. Cette disposition est connue en elle-même et rappelée dans le document WO2017021608 déjà cité.

La mono-pale 7 arrière est de même constitution que la pâle 6 avec une pale active 7a, un contrepoids 7d et des partie rigides 7b et 7c de liaison de ces deux éléments à un mât rotor 9.

A l'arrière du fuselage, l'aérodyne possède un propulseur 10 (par exemple à hélices) destiné à produire une poussée lors du vol de croisière.

On constate, sur les figures 2 et 4, que chacune des mono-pales est orientée longitudinalement vers l'arrière de l'aérodyne, seuls les contrepoids et les parties rigides qui les supportent étant dirigés vers l'avant de leur mât rotor 8,9 respectif.

L'une des principales caractéristiques de l'invention, dans ce type d'aérodyne, réside dans un élément de structure 11 qui est situé au sommet du fuselage et qui est mobile par rapport à ce dernier entre une position d'effacement vers la surface externe du fuselage de manière à affleurer cette surface ou demeurer au voisinage de celle-ci - en tout cas écartée de la voilure tournante - et une position de service en saillie de cette surface du fuselage. La position d'effacement est représentée aux figures 1 et 3. La position de service est celle représentée aux figures 2 et 4. L'aérodyne est en vol vertical aux figures 1 et 3, les mono-pales tournent en synchronisme de manière contra rotative à partir d'une position de départ précise qui est celle des figures 2 et 4 où elles sont immobilisées longitudinalement au-dessus du fuselage 1. Dans ces dernières figures l'aérodyne est représenté en vol sensiblement horizontal (vol de croisière). La voilure tournante est, pour cette allure, un handicap en ce qui concerne la traînée de l'appareil car cette dernière engendre d'importantes perturbations aérodynamiques et de nombreuses turbulences du vent relatif.

L'élément 11 en saillie du fuselage a plusieurs fonctions.

Il constitue d'abord un élément de calage de la partie 6a de la mono-pale dans une position strictement alignée avec la direction du vent relatif en vol de croisière. Ce calage est obtenu par un appui de l'élément 11 sous la pale en correspondance de forme avec sa surface inférieure. Cet appui peut être contraint mécaniquement en étant forcé par la saillie de l'élément 11 ou pneumatiquement en créant une aspiration de la pale contre la surface supérieure de l'élément 11. Cette surface supérieure 11a sera de préférence recouverte d'une garniture élastique de protection des pièces en contact et, le cas échéant, d'étanchéité de l'aspiration. On notera que, pour une pale vrillée, on aura avantage à immobiliser cette dernière sous un pas collectif négatif de manière que l'extrémité libre de la pale soit dans un plan commun à celui du contrepoids 7d de la mono-pale 7 qui est dans son prolongement.

Il constitue également un élément de comblement de l'espace séparant la mono-pale de la surface supérieure du fuselage 1, élément profilé dans le sens de l'écoulement du vent relatif. Sa dimension longitudinale permet qu'il soit en appui sous le contrepoids 7d de la pale 7, affermissant l'alignement de celle-ci avec la pale qui la précède. Enfin il possède un relief 11b qui vient se loger entre l'extrémité de la pale 6 et l'extrémité du contrepoids 7d de la pale 7, comblant ainsi la solution de continuité de surface qui nécessairement existe entre les deux pales. On aura avantage à implanter les mâts rotor de manière que l'espace comblé par ce relief 11b soit le plus faible possible.

Cet élément 11 forme enfin une partie supérieure du fuselage dont la surface extérieure est profilée, dans le sens du vent relatif, le plus en continuité possible avec celle du fuselage pour un écoulement des veines d'air sans turbulence. On notera que, quand l'élément 11 est escamoté dans le fuselage comme illustré par la figure 3, l'espace ainsi évidé n'altère pas les propriétés aérodynamiques de l'appareil car il est en vol vertical.

Selon une autre caractéristique de l'aérodyne, le fuselage 1 présentant une partie avant 1b plongeante par rapport à son axe de roulis 1a, le mât rotor 8 de la mono-pale avant 6 est situé sensiblement à la jonction de cette partie avec la partie principale du fuselage. Cette partie plongeante 1b est équipée d'une protubérance fixe 12 profilée, dans l'axe de l'élément 11 pour favoriser encore un meilleur écoulement aérodynamique.

De manière analogue le fuselage 1 présentant une partie arrière 1c, également plongeante par rapport à son axe de roulis 1a, le mât rotor 9 de la mono-pale 7 arrière est situé sensiblement à la jonction de cette partie avec la partie principale du fuselage. Cette partie plongeante 1c est équipée d'une protubérance fixe 13 profilée, dans le prolongement de l'élément 11 pour favoriser aussi l'écoulement aérodynamique.

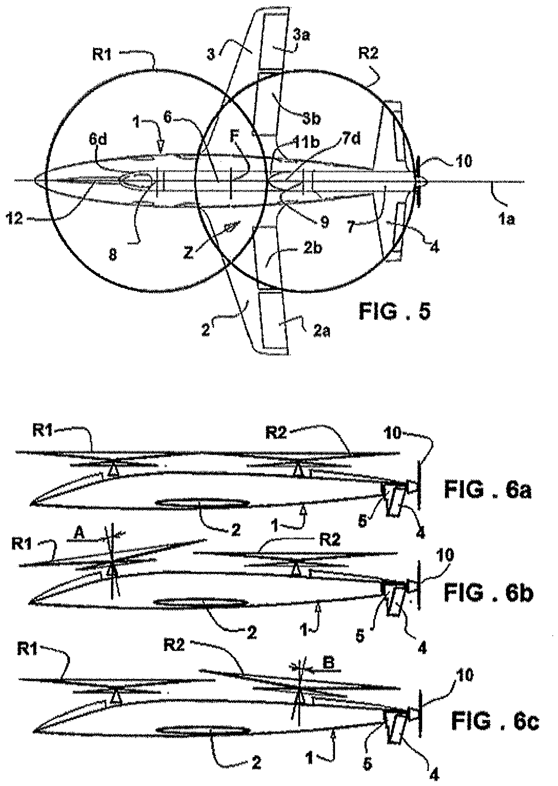

L'avantage de ces positions s'explique en regard des figures 6a, 6b et 6c. On y a représenté le disque rotor R1 et le disque rotor R2 des mono-pales avant 6 et arrière 7 dans chacune de trois allures de vol de l'appareil. La première allure (figure 6a) correspond à un vol vertical ou stationnaire. L'assiette des disques rotor R1 et R2 est horizontale. A la figure 6b, l'assiette du disque rotor R1 est inclinée sur l'avant pour conférer une vitesse horizontale à l'aérodyne (sans changer son assiette générale) tandis que le disque R2 reste horizontal et assure l'essentiel de la portance. A la figure 6c, l'assiette du disque R2 est inclinée vers l'arrière et celle du disque R1 est horizontale, pour créer une allure horizontale arrière à l'appareil, le cas échéant. Bien entendu, cette faculté d'inclinaison des disques rotors peut s'ajouter à la phase consistant, pour changer d'allure, à modifier l'assiette de l'appareil en faisant varier la répartition de la portance entre le rotor avant et le rotor arrière, comme dans les appareils connus, avec cependant les inconvénients induits au niveau de la traînée du second rotor.

On comprend que dans le cas des figures, grâce à l'emplacement des mâts rotors, on peut disposer d'une amplitude A de basculement de l'assiette du disque R1 rotor avant vers l'avant, et B de basculement du disque R2 rotor arrière, vers l'arrière relativement importante (de 5 à 25 degrés par exemple, en fonction de la pente plus ou moins abrupte du fuselage à cet endroit). Le basculement inverse de ces disques est quant à lui limité à un ou deux degrés (au maximum 5 degrés en fonction de la géométrie des éléments environnant le disque rotor) pour ne pas risquer d'heurter le fuselage. Des moyens de butée sont prévus à cet effet au niveau du mât rotor. L'avantage de cette disposition tient à la possibilité de placer les disques rotors au plus proche du sommet du fuselage donc d'obtenir un maître couple réduit de l'appareil pour son allure de vol horizontale. Bien entendu, chaque disque rotor disposera également d'un degré de liberté permettent une inclinaison latérale de part et d'autre du fuselage, pour notamment pouvoir maîtriser ou commander son comportement en lacet et roulis.

A la figure 5, l'aérodyne est représenté vu de dessus. On y retrouve la plupart des éléments déjà décrits avec les mêmes références. On constate que les disques rotors sont sécants de sorte que leur projection horizontale définit une zone d'intersection Z. Dans la figure, cette zone d'intersection Z est située à l'aplomb du foyer F de portance de l'aile principale 2,3 de l'appareil. Cette géométrie permet d'obtenir un bon compromis entre le flux d'air traversant les disques rotors et la perturbation de ce flux par la voilure fixe de l'appareil lors des phases. Dans une variante non représentée, l'aile principale de la voilure fixe de l'appareil est située plus à l'arrière et la projection horizontale de la zone Z d'intersection des disques rotors est en avant de l'aile principale.

La figure 5 illustre un aérodyne dans lequel les deux disques rotors R1 et R2 sont identiques. On aura remarqué que dans leur état d'inactivité, les mono-pales présentent leur contrepoids vers l'avant de l'appareil. Le contrepoids 6d de la mono-pale avant est en porte-à-faux au-dessus du nez du fuselage et constitue une prise au vent relatif dont on peut diminuer l'importance en prévoyant d'installer une mono-pale avant plus courte qu'à l'arrière afin de diminuer l'importance dimensionnelle du contrepoids. Ainsi l'une des caractéristiques de l'invention réside-telle dans un disque rotor avant R1 de diamètre plus petit que celui du disque rotor R2 arrière.

Les volets 2a, 2b, 3a, 3b de l'aile principale 2,3 permettent, rabattus pour le décollage ou l'atterrissage de l'appareil, de diminuer la perturbation aérodynamique provoquée par la voilure fixe dans le flux de la voilure tournante.

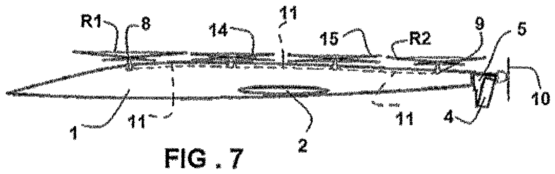

Le schéma de la figure 7 illustre un aérodyne dans lequel on a mis en place une voilure tournante comportant au moins un (ici deux) rotor intermédiaire 14,15. Ces rotors intermédiaires sont soit bipales, comme dans le schéma, soit mono-pales et contrarotatifs. Le fuselage comportera bien entendu un élément tel que celui 11 décrit ci-dessus, en plusieurs parties, entre les mâts rotors pour caler les unes par rapport aux autres, dans un alignement précis, chacune des pales (mono ou bi) des rotors intermédiaires et combler les interstices séparant chaque pale, dans leur position de stockage, à l'instar des mono-pales avant et arrière décrites en regard des figures 2 et 4.

## Revendications

1. Aérodyne hybride comprenant un fuselage (1), une voilure fixe (2,3,4,5) et une voilure tournante (6,7) apte à être immobilisée en vol de croisière de l'aérodyne, la voilure tournante étant apte à produire de la portance par sa rotation en phase de vol vertical et à être immobilisée et stockée longitudinalement en phase de vol de croisière, du type comportant au moins une mono-pale (6) à contrepoids (6d) située au sommet et à l'avant du fuselage (1), ladite mono-pale étant articulée autour d'un axe, perpendiculaire à l'axe de rotation du rotor, sensiblement au niveau dudit axe de rotation du mât rotor,
**caractérisé en ce qu'**il comporte des moyens pour autoriser l'inclinaison du disque rotor (R1) formé par ladite mono-pale autour de l'axe perpendiculaire susdit vers l'avant et pour limiter son inclinaison vers l'arrière sur une plage de basculement au plus égale à cinq degrés d'angle.

2. Aérodyne selon la revendication 1, **caractérisé en ce que** le fuselage (1) présentant une partie (1b) plongeante par rapport à son axe de roulis (1a) située en avant d'une partie principale, le mât rotor (8) de la mono-pale avant (6) est situé sensiblement à la jonction de cette partie avec la partie principale du fuselage.

3. Aérodyne selon l'une des revendications précédentes **caractérisé en ce qu'**il comporte une mono-pale arrière (7) contrarotative par rapport à la pale avant, le fuselage (1) possédant une partie arrière (1c) plongeante par rapport à son axe de roulis (la), ladite mono-pale étant articulée autour d'un axe, perpendiculaire à l'axe de rotation du rotor, sensiblement au niveau dudit axe de rotation du mât rotor, le mât rotor de la mono-pale arrière (7) étant situé sensiblement à la jonction de cette partie (1c) avec la partie principale du fuselage (1) et **en ce qu'**il comporte des moyens pour autoriser l'inclinaison du disque rotor (R2) formé par ladite mono-pale autour de l'axe perpendiculaire susdit vers l'arrière et pour limiter son inclinaison vers l'avant sur une plage de basculement au plus égale à cinq degrés d'angle.

4. Aérodyne selon l'une des revendications précédentes, **caractérisé en ce qu'**il comprend un élément de structure (11) porté par le fuselage (1) et mobile par rapport à celui-ci entre une position escamotée dans laquelle il affleure la surface extérieure du fuselage et une position de service dans laquelle il vient au contact d'au moins ladite mono-pale (6) de la voilure tournante quand celle-ci est arrêtée et verrouillée longitudinalement.

5. Aérodyne selon la revendication 4, **caractérisé en ce que** cet élément (11) possède une surface supérieure (11) dont le profil est en correspondance de forme avec celui la face inférieure de ladite mono-pale (6) sous laquelle il s'appuie.

6. Aérodyne selon la revendication 5, **caractérisé en ce que** la surface supérieure (11a) de l'élément (11) correspond à la surface inférieure d'une mono-pale plane immobilisée sous un pas nul.

7. Aérodyne selon la revendication 5, **caractérisé en ce que** la surface supérieure (11a) de l'élément (11) correspond à la surface inférieure d'une mono-pale vrillée, immobilisée sous un pas négatif.

8. Aérodyne selon l'une des revendications précédentes, **caractérisé en ce que** l'appui de l'élément de structure (11) sous la mono-pale (6) est réalisé sous contrainte contre la voilure tournante de manière à solidariser le plus possible pale et élément.

9. Aérodyne selon la revendication 8, **caractérisé en ce que** la contrainte d'appui est obtenue par aspiration entre pale et élément.

10. Aérodyne selon l'une des revendications 4 à 9, **caractérisé en ce qu'**une garniture élastiquement compressible recouvre la surface supérieure (11a) de l'élément de structure pour à la fois assurer l'élasticité de l'appui, la protection des pièces en contact et, le cas échéant, l'étanchéité du contact.

11. Aérodyne selon l'une des revendications 4 à 10, **caractérisé en ce que** la voilure tournante comporte une deuxième mono-pale (7) au sommet du fuselage (1) et à l'arrière de la première mono-pale (6) susdite et **en ce qu'**un espace restreint sépare la première mono-pale et le contrepoids de la mono-pale qui la suit afin de réduire au minimum les discontinuités de la surface supérieure et **en ce que** l'élément (11) de structure mobile vient en appui contre les extrémités adjacentes de la pale (6) et du contrepoids (7d) pour les caler en alignement l'un par rapport à l'autre.

12. Aérodyne selon la revendication 11, **caractérisé en ce que** la surface supérieure (11a) de l'élément de structure (11) mobile comporte un relief (11b) pour combler l'espace restreint séparant deux pales (6, 7) successives.

13. Aérodyne selon l'une des revendications 11 et 12, **caractérisé en ce qu'**il comporte au moins une voilure tournante bipale (14) située au sommet du fuselage entre les deux mono-pales (6, 9) susdits, **en ce que** des espaces restreints séparent les pales successives dans leur position de stockage et **en ce que** et **en ce que** des éléments (11) de structure mobile viennent en appui contre les extrémités adjacentes de la pale (14) et des mono pales l'encadrant pour les caler en alignement les unes par rapport aux autres, les éléments de structure mobile (11) comportant des reliefs pour combler les espaces restreints séparant deux pales successives.

14. Aérodyne selon l'une des revendications précédentes, **caractérisé en ce que** la deuxième partie (6c) de la mono-pale (6) avant qui porte le contrepoids, est évidée.

15. Aérodyne selon la revendication 8 dépendante de la revendication 3, **caractérisé en ce que** les disques rotor (R1, R2) sont tels que leur projection sur un plan horizontal comporte une zone d'intersection (Z).

16. Aérodyne selon la revendication 15, **caractérisé en ce que** la voilure fixe comporte une aile principale (2, 3) transversale au fuselage (1), la zone d'intersection (Z) susdite est en avant de la projection horizontale de cette aile principale.

17. Aérodyne selon la revendication 15, **caractérisé en ce que** la voilure fixe comporte une aile principale (2, 3) transversale au fuselage (1), la zone d'intersection (Z) susdite contient le foyer (F) de portance de cette aile principale.

18. Aérodyne selon l'une des revendications précédentes dépendantes des revendications 3 ou 11, **caractérisé en ce que** le diamètre du disque rotor (R1) avant et inférieur à celui du disque rotor arrière (R2) .

19. Aérodyne selon l'une des revendications 16 et 17, **caractérisé en ce que** l'aile fixe comporte des volets (2a, 2b, 3a, 3b) rabattables verticalement.

20. Aérodyne selon l'une des revendications précédentes, **caractérisé en ce que** l'aérodyne possède un empennage (4) en H, en U ou en V vers le bas.

## Patentansprüche

1. Hybrides strömungsgetragenes Luftfahrzeug, umfassend einen Rumpf (1), einen starren Flügel (2, 3, 4, 5) und einen sich drehenden Flügel (6, 7), der geeignet ist, im Reiseflug des strömungsgetragenen Luftfahrzeugs festgestellt zu werden, wobei der sich drehende Flügel geeignet ist, durch seine Rotation in der Senkrechtflugphase den Auftrieb zu erzeugen und in der Reiseflugphase festgestellt und in Längsrichtung aufbewahrt zu werden, vom Typ, der mindestens ein Einzelblatt (6) mit Gegengewicht (6d) umfasst, das sich auf der Oberseite und vorne am Rumpf (1) befindet, wobei das genannte Einzelblatt um eine zur Rotationsachse des Rotors senkrechte Achse angelenkt ist, im Wesentlichen im Bereich der genannten Rotationsachse des Rotormasts,
**dadurch gekennzeichnet, dass** es Mittel umfasst, um die Neigung der von dem genannten Einzelblatt gebildeten Rotorscheibe (R1) um die oben genannte senkrechte Achse nach vorne zu gestatten und um ihre Neigung nach hinten auf einen Kippbereich von höchsten fünf Winkelgrad zu begrenzen.

2. Strömungsgetragenes Luftfahrzeug nach Anspruch 1, **dadurch gekennzeichnet, dass** der Rumpf (1) einen in Bezug auf seine Rollachse (1a) tiefer liegenden Teil aufweist, der sich vor einem Hauptteil befindet, wobei sich der Rotormast (8) des vorderen Einzelblattes (6) im Wesentlichen an der Verbindung dieses Teils mit dem Hauptteil des Rumpfes befindet.

3. Strömungsgetragenes Luftfahrzeug nach einem der vorhergehenden Ansprüche, **dadurch gekennzeichnet, dass** es ein hinteres Einzelblatt (7) umfasst, das in Bezug auf das vordere Blatt gegenläufig ist, wobei der Rumpf (1) einen hinteren Teil (1c) besitzt, der in Bezug auf seine Rollachse (1a) tiefer liegt, wobei das genannte Einzelblatt um eine zur Rotationsachse des Rotors senkrechte Achse angelenkt ist, im Wesentlichen im Bereich der genannten Rotationsachse des Rotormastes, wobei sich der Rotormast des hinteren Einzelblattes (7) im Wesentlichen an der Verbindung dieses Teils (1c) mit dem Hauptteil des Rumpfes (1) befindet, und dass es Mittel umfasst, um die Neigung der von dem genannten Einzelblatt gebildeten Rotorscheibe (R2) um die oben genannte senkrechte Achse nach hinten zu gestatten und ihre Neigung nach vorne auf einen Kippbereich von höchstens fünf Winkelgrad zu begrenzen.

4. Strömungsgetragenes Luftfahrzeug nach einem der vorhergehenden Ansprüche, **dadurch gekennzeichnet, dass** es ein Strukturelement (11) umfasst, das von dem Rumpf (1) getragen wird und in Bezug auf denselben zwischen einer eingefahrenen Stellung, in der es bündig mit der Außenfläche des Rumpfes ist, und einer Betriebsstellung beweglich ist, in der es mit mindestens dem genannten Einzelblatt (6) des sich drehenden Flügels in Kontakt kommt, wenn dieser in Längsrichtung angehalten und verriegelt ist.

5. Strömungsgetragenes Luftfahrzeug nach Anspruch 4, **dadurch gekennzeichnet, dass** dieses Element (11) eine obere Oberfläche (11) besitzt, deren Profil in Formübereinstimmung mit dem Profil der Unterseite des genannten Einzelblattes (6) ist, unter dem es sich abstützt.

6. Strömungsgetragenes Luftfahrzeug nach Anspruch 5, **dadurch gekennzeichnet, dass** die obere Oberfläche (11a) des Elements (11) der unteren Oberfläche eines flachen Einzelblattes entspricht, das unter einer Nullsteigung festgestellt ist.

7. Strömungsgetragenes Luftfahrzeug nach Anspruch 5, **dadurch gekennzeichnet, dass** die obere Oberfläche (11a) des Elements (11) der unteren Oberfläche eines verdrehten Einzelblattes entspricht, das unter einer negativen Steigung festgestellt ist.

8. Strömungsgetragenes Luftfahrzeug nach einem der vorhergehenden Ansprüche, **dadurch gekennzeichnet, dass** die Anlage des Strukturelements (11) unter dem Einzelblatt (6) unter Spannung gegen den sich drehenden Flügel erfolgt, sodass das Blatt und das Element so gut wie möglich verbunden werden.

9. Strömungsgetragenes Luftfahrzeug nach Anspruch 8, **dadurch gekennzeichnet, dass** die Anlagespannung durch Ansaugen zwischen dem Blatt und dem Element erreicht wird.

10. Strömungsgetragenes Luftfahrzeug nach einem der Ansprüche 4 bis 9, **dadurch gekennzeichnet, dass** ein elastisch komprimierbarer Belag die obere Oberfläche (11a) des Strukturelements abdeckt, um gleichzeitig die Elastizität der Anlage, den Schutz der in Kontakt stehenden Teile und gegebenenfalls die Dichtheit des Kontakts sicherzustellen.

11. Strömungsgetragenes Luftfahrzeug nach einem der Ansprüche 4 bis 10, **dadurch gekennzeichnet, dass** der sich drehende Flügel ein zweites Einzelblatt (7) auf der Oberseite des Rumpfes (1) und hinter dem oben genannten ersten Einzelblatt (6) umfasst und dass ein begrenzter Raum das erste Einzelblatt und das Gegengewicht des Einzelblattes, das auf dieses folgt, trennt, um die Unterbrechungen der oberen Oberfläche auf ein Minimum herabzusetzen, und dass das bewegliche Strukturelement (11) an den angrenzenden Enden des Blattes (6) und des Gegengewichts (7d) zur Anlage kommt, um sie in Ausrichtung zueinander zu blockieren.

12. Strömungsgetragenes Luftfahrzeug nach Anspruch 11, **dadurch gekennzeichnet, dass** die obere Oberfläche (11a) des beweglichen Strukturelements (11) ein Reliefelement (11b) umfasst, um den begrenzten Raum, der die beiden aufeinanderfolgenden Blätter (6, 7) trennt, auszufüllen.

13. Strömungsgetragenes Luftfahrzeug nach einem der Ansprüche 11 und 12, **dadurch gekennzeichnet, dass** es mindestens einen Zweiblatt-Drehflügel (14) umfasst, der sich auf der Oberseite des Rumpfes zwischen den beiden oben genannten Einzelblättern (6, 9) befindet, dass die begrenzten Räume die aufeinanderfolgenden Blätter in ihrer Aufbewahrungsposition trennen und dass die beweglichen Strukturelemente an den angrenzenden Enden des Blattes (14) und der Einzelblätter, die es umschließen, zur Anlage kommen, um sie in Ausrichtung zueinander zu blockieren, wobei die beweglichen Strukturelemente (11) Reliefelemente umfassen, um die begrenzten Räume, die zwei aufeinanderfolgende Blätter trennen, auszufüllen.

14. Strömungsgetragenes Luftfahrzeug nach einem der vorhergehenden Ansprüche, **dadurch gekennzeichnet, dass** der zweite Teil (6c) des vorderen Einzelblattes (6), der das Gegengewicht trägt, ausgespart ist.

15. Strömungsgetragenes Luftfahrzeug nach Anspruch 8, in Abhängigkeit von Anspruch 3, **dadurch gekennzeichnet, dass** die Rotorscheiben (R1, R2) derart sind, dass ihre Projektion auf eine horizontale Ebene einen Schnittbereich (Z) umfasst.

16. Strömungsgetragenes Luftfahrzeug nach Anspruch 15, **dadurch gekennzeichnet, dass** der starre Flügel einen Hauptflügel (2, 3) quer zum Rumpf (1) umfasst, wobei der oben genannte Schnittbereich (Z) vor der horizontalen Projektion dieses Hauptflügels liegt.

17. Strömungsgetragenes Luftfahrzeug nach Anspruch 15, **dadurch gekennzeichnet, dass** der starre Flügel einen Hauptflügel (2, 3) quer zum Rumpf (1) umfasst, wobei der oben genannte Schnittbereich (Z) den aerodynamischen Mittelpunkt (F) des Auftriebs dieses Hauptflügels umfasst.

18. Strömungsgetragenes Luftfahrzeug nach einem der vorhergehenden Ansprüche, in Abhängigkeit von den Ansprüchen 3 oder 11, **dadurch gekennzeichnet, dass** der Durchmesser der vorderen Rotorscheibe (R1) kleiner als der der hinteren Rotorscheibe (R2) ist.

19. Strömungsgetragenes Luftfahrzeug nach einem der Ansprüche 16 und 17, **dadurch gekennzeichnet, dass** der starre Flügel vertikal umklappbare Klappen (2a, 2b, 3a, 3b) umfasst.

20. Strömungsgetragenes Luftfahrzeug nach einem der vorhergehenden Ansprüche, **dadurch gekennzeichnet, dass** das strömungsgetragene Luftfahrzeug ein Leitwerk (4) in H-Form, U-Form oder in umgedrehter V-Form besitzt.

## Claims

1. Hybrid aerodyne including a fuselage (1), a fixed wing (2, 3, 4, 5) and a rotary wing (6,7) capable of being immobilized in cruising flight of the aerodyne, the rotary wing being able to produce lift by its rotation in a vertical flight phase and to be immobilized and stored longitudinally in a cruise flight phase, of the type including at least one single-blade (6) with a counterweight (6d) situated at the top and at the front of the fuselage (1), said single-blade being articulated about an axis perpendicular to the axis of rotation of the rotor, substantially at the level of said axis of rotation of the rotor mast,
**characterized in that** it includes a means for allowing forward inclination of the rotor disk (R1) formed by said single-blade about the above-mentioned perpendicular axis and for limiting its backward inclination over a range of tilt at most equal to five degrees of angle.

2. Aerodyne according to claim 1, **characterized in that** the fuselage (1) having a part (1b) dipping with respect to its roll axis (1a) located in front of a main part, the rotor mast (8) of the front single-blade (6) is situated substantially at the junction of this part with the main part of the fuselage.

3. Aerodyne according to either one of the preceding claims, **characterized in that** it includes a rear single-blade (7) contrarotating relative to the front blade, the fuselage (1) having a rear part (1c) dipping relative to its roll axis (1a), said single-blade being articulated about an axis perpendicular to the axis of rotation of the rotor, substantially at the level of said axis of rotation of the rotor mast, the rotor mast of the rear single-blade (7) being situated substantially at the junction of this part (1c) with the main part of the fuselage (1) and **in that** it comprises a means for allowing rearward inclination of the rotor disc (R2) formed by said single-blade about the aforesaid perpendicular axis and to limit its forward inclination over a range of tilt at most equal to five degrees of angle.

4. Aerodyne according to any one of the preceding claims, **characterized in that** it comprises a structural element (11) carried by the fuselage (1) and movable relative thereto between a retracted position in which it is flush with the outer surface of the fuselage and an in-service position in which it comes into contact with at least said single-blade (6) of the rotary wing when the latter is stopped and locked longitudinally.

5. Aerodyne according to claim 4, **characterized in that** this element (11) has an upper surface (11a) whose profile has a corresponding shape to that of the lower face of said single-blade (6) under which it bears.

6. Aerodyne according to claim 5, **characterized in that** the upper surface (11a) of the element (11) corresponds to the lower surface of a flat single-blade immobilized at zero pitch.

7. Aerodyne according to claim 5, **characterized in that** the upper surface (11a) of the element (11) corresponds to the lower surface of a twisted single-blade immobilized at a negative pitch.

8. Aerodyne according to any one of the preceding claims, **characterized in that** the bearing of the structural element (11) under the single-blade (6) is produced under stress against the rotary wing so as to secure as much as possible the blade and the element.

9. Aerodyne according to claim 8, **characterized in that** the bearing stress is obtained by suction between the blade and the element.

10. Aerodyne according to any one of claims 4 to 9, **characterized in that** an elastically compressible lining covers the upper surface (11a) of the structural element to ensure the elasticity of the support, protection of the parts in contact and where applicable sealing of the contact.

11. Aerodyne according to any one of claims 4 to 10, **characterized in that** the rotary wing includes a second single-blade (7) at the top of the fuselage (1) and to the rear of the aforesaid first single-blade (6) and **in that** a restricted space separates the first single-blade and the counterweight of the single-blade which follows it in order to reduce the discontinuities of the upper surface to a minimum and **in that** the mobile structural element (11) comes to bear against the adjacent ends of the blade (6) and of the counterweight (7d) to lock them in alignment relative to one another.

12. Aerodyne according to claim 11, **characterized in that** the upper surface (11a) of the mobile structural element (11) includes a relief (11b) to fill the restricted space separating two successive blades (6, 7).

13. Aerodyne according to either one of claims 11 and 12, **characterized in that** it includes at least one two-blade rotary wing (14) situated at the top of the fuselage between the two aforesaid single-blades (6, 9), **in that** restricted spaces separate the successive blades in their storage position, and **in that** mobile structural elements (11) come to bear against the adjacent ends of the blade (14) and of the single-blades framing it to lock them in alignment relative to one another, the mobile structural elements (11) including reliefs to fill the restricted spaces separating two successive blades.

14. Aerodyne according to any one of the preceding claims, **characterized in that** the second part (6c) of the front single-blade (6) which carries the counterweight is open.

15. Aerodyne according to claim 8 when dependent on claim 3, **characterized in that** the rotor discs (R1, R2) are such that their projection on a horizontal plane includes an intersection zone (Z).

16. Aerodyne according to claim 15, **characterized in that** the fixed wing includes a main wing (2, 3) transverse to the fuselage (1) and the aforesaid intersection zone (Z) is forward of the horizontal projection of this main wing.

17. Aerodyne according to claim 15, **characterized in that** the fixed wing includes a main wing (2, 3) transverse to the fuselage (1) and the aforesaid intersection zone (Z) contains the lift focus (F) of this main wing.

18. Aerodyne according to any one of the preceding claims when dependent on claim 3 or 11, **characterized in that** the diameter of the front rotor disc (R1) is smaller than that of the rear rotor disc (R2).

19. Aerodyne according to either one of claims 16 and 17, **characterized in that** the fixed wing includes vertically foldable flaps (2a, 2b, 3a, 3b).

20. Aerodyne according to any one of the preceding claims, **characterized in that** the aerodyne has an inverted H-shape, U-shape or V-shape tail section (4).
